# EUROPEAN PATENT SPECIFICATION

(11) **EP 2 332 711 B1**
(45) Date of publication and mention of the grant of the patent: **05.03.2014**
(21) Application number: 09812903.4
(22) Date of filing: 10.09.2009
(51) Int. Cl.: B29C 45/00, B29C 45/73, B29C 45/78, B29K 67/00, B29K 105/04, B29K 105/06, B29C 44/34, B29C 44/04, B29C 45/17, C08J 9/00, C08J 9/12, C08J 9/34

(54) **Method for producing a molded article**
Verfahren zur Herstellung eines Formartikels
Procédé de fabrication d'un article moulé

(30) Priority: 10.09.2008 JP 2008231942
(43) Date of publication of application: 15.06.2011
(73) Proprietor: Komatsu, Michio, Iwaki-shi, Fukushima 972-8301 (JP)
(72) Inventor: Komatsu, Michio, Iwaki-shi, Fukushima 972-8301 (JP)
(74) Representative: Schön, Christoph
(86) International application number: PCT/JP2009/004509
(87) International publication number: WO 2010/029754

(56) References cited:
- EP-A1- 1 746 136
- WO-A2-2008/089358
- JP-A- 2004 204 143
- JP-A- 2004 292 499
- JP-A- 2006 069 215
- JP-A- 2006 103 202
- JP-A- 2006 137 063
- JP-A- 2007 191 549
- JP-A- 2007 246 693
- US-A1- 2003 059 567
- US-A1- 2007 269 647
- US-B1- 6 169 122

## Description

### Technical Field

The present invention relates to a method of producing a molded article formed of an injection-molded article of a polylactic acid.

### Background Art

Recently, biodegradable resins such as polylactic acids decomposable in the soil by action of microorganisms such as bacteria after disposal have been proposed in order to reduce the impact on the environment caused by wastes of synthetic resins. The polylactic acid can be formed into molded articles having various shapes by extrusion molding and pressure forming, for example.

Use of the molded article of the polylactic acid as food containers such as cups, trays, bowls, and big bowls formed of a hollow molded article in order to accommodate cooked foods and drinks, for example, has been investigated.

The cooked foods and drinks have a temperature of approximately 90 to 120°C, for example. Accordingly, the food container needs to have heat retaining properties such that the temperature in the range can be kept, i.e., insulation properties. The food container further needs to have lightweightness and strength such that the food container can endure in use as a food container.

Conventionally, a food container comprising a resin composition containing a polylactic acid and fine particles composed of lamellar silicate is known (for example, see Patent Literature 1). The food container is formed by deep drawing molding of a sheet prepared by extrusion molding the resin composition, for example. However, the food container comprising the resin composition has inconvenience in that the food container thermally deforms at a temperature of not less than 96°C. The food container comprising the resin composition is a solid molded article. For this reason, the thickness thereof must be increased in order to obtain sufficient heat retaining properties, while an increased thickness leads to inconvenience of impaired lightweightness.

In order to ensure the heat retaining properties in the food container, the food container of a foamed body can be considered. A food container formed by molding a resin composition and entirely formed of a foamed body has been proposed, wherein the resin composition is prepared by mixing fine particles of lamellar silicate with a polylactic acid, and further impregnating the mixture with supercritical carbon dioxide (for example, see Patent Literature 2).

In order to obtain the food container, first, the lamellar silicate is mixed with a polylactic acid, and the mixture is further impregnated with supercritical carbon dioxide in an autoclave to form a resin composition. Subsequently, the resin composition is extracted from the autoclave, and the carbon dioxide is eliminated in a 160°C oil bath. Thereby, a food container entirely formed of a foamed body can be obtained.

The food container entirely formed of a foamed body cannot obtain strength such that the food container can endure in use. Accordingly, strength needs to be ensured by applying a film or a sheet onto the surface of the food container to form a non-foam layer. However, the food container has inconvenience in that biodegradability thereof is impaired in the case where a film or a sheet of other resin is applied onto the surface of the food container.

### Citation list

### Patent Literature

Patent Literature 1: Japanese Patent Laid-Open No. 2004-204143
Patent Literature 2: Japanese Patent Laid-Open No. 2004-292499
Patent Literature 3: Japanese Patent Laid-Open No. 2006-137063

US 6 169 122 B 1 discloses semi-crystalline microcellular foams that include a midlevel amount of nucleating agent, and methods of their production. The microcellular foams can be produced in typical polymer processing techniques such as extrusion, injection molding and blow molding. The foams exhibit excellent mechanical properties and can be formed over a broad range of density into a number of different foam articles.

### Disclosure of the Invention

### Technical Problem

An object of the present invention is to eliminate this inconvenience and provide a method for production of a molded article having lightweightness, insulation properties, and strength without biodegradability of a polylactic acid being impaired. Another object of the present invention is to provide a method for production of a molded article having heat resistance such that the molded article can endure relatively high temperature without biodegradability of a polylactic acid being impaired.

### Solution to Problem

In order to achieve the objects, the present invention is a method for producing a molded article formed of an injection-molded article of a polylactic acid, according to claim 1.

The molded article produced according to the present invention is formed of an injection-molded article formed by injection molding a resin composition containing a polylactic acid and fine particles having an average particle size in the range of 1 to 150 nm and prepared by impregnating the polylactic acid and the fine particles with supercritical nitrogen. The fine particles may be an organic substance having biodegradability, e.g., dried powder of plants such as kenaf, or may be an inorganic substance. Examples of the fine particles of an inorganic substance having the average particle size in the range can include lamellar silicate having an average layer thickness in the range of 1 to 100 nm and a longer diameter of not more than 150 nm. The term "supercritical" refers to a state where gas has diffusibility of gas and solubility of a liquid under a temperature and pressure exceeding the temperature and pressure determined according to the type of gas (critical point).

The molded article produced according to the present invention is formed by injection molding the resin composition prepared by impregnating the polylactic acid and the fine particles with supercritical nitrogen in the range based on the whole amount of the resin composition. Thereby, the molded article can comprise the foam layer of discontinuous cells inside thereof and the non-foam layer on the surfaces thereof as mentioned above. The molded article produced according to the present invention can have lightweightness and insulation properties because the molded article comprises the foam layer of discontinuous cells inside thereof. The molded article produced according to the present invention can also have necessary strength because the molded article comprises the non-foam layer on the surfaces thereof.

In the resin composition, if the amount of the supercritical nitrogen impregnated is less than 0.05% by weight based on the whole amount of the resin composition, the pore size of the discontinuous cell in the foamed body cannot be sufficiently large, so that necessary insulation properties cannot be obtained. On the other hand, if the amount of the supercritical nitrogen impregnated is more than 0.3% by weight based on the whole amount of the resin composition, the pore size of the discontinuous cell in the foam layer is excessively large, so that necessary strength cannot be obtained.

Moreover, in the molded article produced according to the present invention, both of the foam layer and the non-foam layer are formed with a polylactic acid. Accordingly, after disposal, the molded article produced according to the present invention is easily decomposed in the soil by action of microorganisms such as bacteria.

The foam layer of the molded article produced according to the present invention preferably includes discontinuous cells having an average pore size in the range of 0.5 to 50 µm. Thereby, the molded article produced according to the present invention can have necessary insulation properties. At an average pore size of the discontinuous cell of less than 0.5 µm, necessary insulation properties may not be obtained. At an average pore size of the discontinuous cell exceeding 50 µm, necessary strength may not be obtained although the insulation properties are good.

According to application, the range of the average pore size of the discontinuous cell can be selected, for example, the range of 0.55 to 10 µm, the range of 9 to 15 µm, or the range of 12 to 48 µm In order to select the average pore size of the discontinuous cell, the amount of nitrogen impregnated is varied. As a result, depending on application, the amount of nitrogen impregnated can be reduced within the range, so that cost can be reduced.

The molded article produced according to the present invention has heat resistance. In this case, the non-foam layer in the molded article produced according to the present invention has a degree of crystallinity in the range of not less than 15%. With the configuration, the molded article produced according to the present invention can obtain necessary heat resistance.

In the molded article produced according to the present invention, the non-foam layer has a degree of crystallinity in the range of 15 to 28%. If degree of crystallinity of the non-foam layer is less than 15%, necessary heat resistance and strength cannot be given to the molded article. On the other hand, even if the degree of crystallinity of the non-foam layer exceeds 28%, no greater effect than that at 28% can be obtained. In order to obtain the degree of crystallinity of the non-foam layer exceeding 28%, the surface of the cavity of a mold needs to be at a high temperature at the time of injection molding, leading to increase in manufacturing cost as well as a longer molding cycle.

The molded article produced according to the present invention can be suitably used as a food container. The molded article produced according to the present invention can also be used for other application in which heat resistance and heat retaining properties (insulation properties) are demanded. Examples of the other application can include molded articles for auto parts or electrical components.

The molded article produced according to the present invention has a specific gravity at which the molded article is capable of sinking in water in the case where the molded article is used as the food container. Thereby, the food container sinks in water when the food container is washed after use, and therefore is easily washed. The molded article produced according to the present invention can have a specific gravity slightly larger than 1 by adjusting the proportion of the foam layer to the non-foam layer. The specific gravity may be the one at which the molded article may sink in water, and needs not to be excessively large. At an excessively large specific gravity, lightweightness of the molded article produced according to the present invention may be impaired.

The molded article produced according to the present invention can be given beauty by providing a coating film on the surface thereof. The coating film preferably includes a biodegradable coating film. By using such a biodegradable coating film for the coating film, beauty can be given without impairing biodegradability of the molded article produced according to the present invention.

The biodegradable coating film may be those containing a biodegradable pigment such as a pigment made of soybean as a raw material (soy ink), or may be a coating film of a material derived from a plant as Japanese lacquer and having biodegradability by itself. The biodegradable coating film made of Japanese lacquer can give an appearance like lacquer ware to the molded article produced according to the present invention, and therefore is particularly advantageous in the case where the molded article is used as a food container.

In the molded article produced according to the present invention, in the case where the lamellar silicate is used as the fine particles, the obtained injection-molded article has opaque white color. For this reason, base coating at the time of forming the coating film is unnecessary, making it advantageous.

The molded article produced according to the present invention is produced by a method for production comprising: a step of mixing fine particles having the average particle size in the range of 1 to 150 nm with a polylactic acid, and further impregnating the polylactic acid and the fine particles with supercritical nitrogen in the range of 0.05 to 0.3% by weight based on the whole amount of the resin composition to form a resin composition; and a step of injection molding the resin composition by injecting the resin composition into the cavity of a mold.

According to examination by the present inventors, in the case where supercritical carbon dioxide is injected into a polylactic acid mixed with fine particles from a cylinder of an injection molding machine, and impregnated into the mixed polylactic acid and fine particles to form a resin composition, a plurality of bubbles produced in the injected resin composition tends to be integrated to form large bubbles having an average diameter of 0.1 to 10 mm. For this reason, the injection-molded article of the resin composition cannot obtain necessary strength.

Then, in the method for production of a molded article produced according to the present invention, a resin composition prepared by mixing the fine particles with the polylactic acid and further impregnating the mixed fine particles and polylactic acid with supercritical nitrogen in the range of 0.05 to 0.3% by weight based on the whole amount of the resin composition is injected into the cavity of a mold. Thus, according to the method for production of a molded article produced according to the present invention, the injection-molded article comprising a foam layer of discontinuous cells inside thereof and a non-foam layer formed integrally with the foam layer on the surfaces thereof and having necessary strength can be obtained.

In the resin composition, if the amount of the supercritical nitrogen impregnated is less than 0.05% by weight based on the whole amount of the resin composition, the pore size of the discontinuous cell in the foamed body cannot be sufficiently large, so that necessary insulation properties cannot be obtained. On the other hand, if the amount of the supercritical nitrogen impregnated exceeds 0.3% by weight based on the whole amount of the resin composition, the pore size of the cell in the foam layer is excessively large, so that necessary strength cannot be obtained.

Because the fine particles have the average particle size in the range, the fine particles can act as a foam nucleus in the foamed body, and can also act as a crystalline nucleus when the polylactic acid crystallizes. It is technically difficult to make the average particle size of the fine particles smaller than 1 nm. If the average particle size of the fine particles exceeds 150 nm, the fine particles cannot act as a crystalline nucleus or a foam nucleus.

In the method for production according to the present invention, the mold is heated such that the surface temperature of the cavity thereof is at a temperature in the range of 75 to less than 90°C. Thus, the molded article comprising a non-foam layer having a degree of crystallinity of not less than 15% can be obtained.

The polylactic acid is a crystalline resin, and it is known that the polylactic acid has a glass transition temperature of 57°C and a crystallization temperature of 110°C. In the method for production according to the present invention, however, the polylactic acid can be crystallized also in the range of a temperature lower than the crystallization temperature.

At a surface temperature of the cavity less than 75°C, the resin composition injected into the cavity is cooled rapidly and solidifies. Foaming is difficult, and the injection-molded article having a predetermined shape cannot be obtained. On the other hand, at a surface temperature of the cavity exceeding 110°C, the surface temperature exceeds the crystallization temperature of the polylactic acid. For this reason, the effect that the polylactic acid can be crystallized also in the range of the temperature lower than the crystallization temperature cannot be obtained.

In the method for production according to the present invention, the mold is heated such that the surface temperature of the cavity thereof is at a temperature in the range of 75 to less than 90°C. Thus, the molding cycle can be shortened.

### Brief Description of Drawings

[Figure 1] Figure 1 is a perspective view showing a configuration of a molded article according to a present embodiment.
[Figure 2] Figure 2 is an explanatory partial sectional view of the molded article shown in Figure 1.
[Figure 3] Figure 3 is an explanatory sectional view of an injection molding apparatus used for production of the molded article shown in Figure 1.
[Figure 4] Figure 4 is a graph showing a degree of crystallinity in each part of the molded article according to present embodiment.

### Description of Embodiments

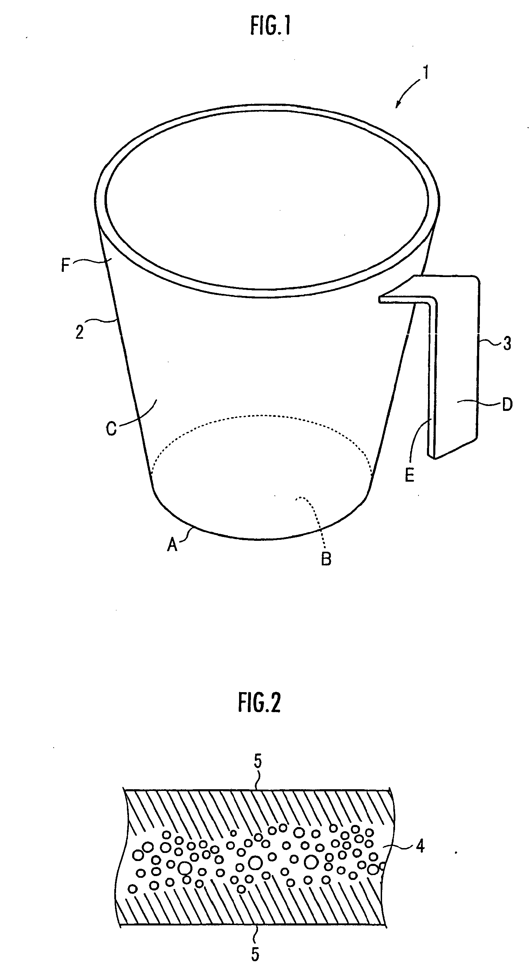

Next, an embodiment according to the invention will be described in more detail with reference to the accompanying drawings. A molded article formed of an injection-molded article of a polylactic acid according to the present embodiment is a food container such as a mug 1 and the like shown in Figure 1, for example. The mug 1 accommodates heated drinks such as coffee, cocoa, soup, milk, various kinds of tea, and hot water, and is used for drinking. The mug 1 includes a cylindrical main body 2 with a bottom that accommodates the drink, and an L-shaped handle portion 3 that projects from the outer circumference of an upper portion of the main body 2.

The mug 1 is an injection-molded article formed by injection molding a resin composition containing a polylactic acid and fine particles having an average particle size in the range of 1 to 150 nm and prepared by impregnating the polylactic acid and the fine particles with supercritical nitrogen. As shown in Figure 2, the mug 1 includes a foam layer 4 inside thereof and a non-foam layer 5 on the surfaces thereof. The foam layer 4 and the non-foam layer 5 are all formed with the polylactic acid, and the non-foam layer 5 is formed integrally with the foam layer 4.

In the mug 1, the foam layer 4 includes discontinuous cells. According to measurement of a cross section of the mug 1 by means of a scanning electron microscopy, the discontinuous cell has an average pore size of 0.5 to 50 µm. According to measurement by differential scanning calorimetry, the non-foam layer 5 has a degree of crystallinity in the range of 15 to 28%.

As a result, the mug 1 has heat resistance to the temperature in the range of 90 to 120°C, and can accommodate the drinks such as coffee, cocoa, soup, milk, various kinds oftea, and hot water heated at the temperature in the range, and can be used for drinking. The mug 1 also has heat retaining properties such that reduction in the temperature is suppressed to keep the temperature suitable for drinking while the drink is served for drinking.

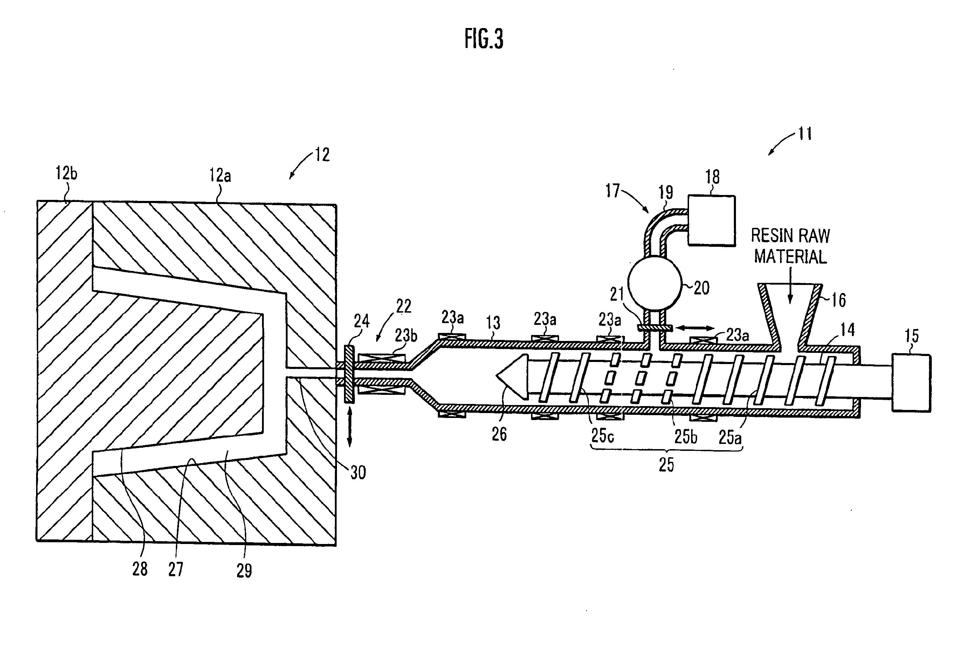

The mug 1 can be produced by an injection molding apparatus 11 shown in Figure 3, for example. The injection molding apparatus 11 includes a cylinder 13 that conveys the resin composition to a mold 12, a rotary shaft 14 arranged in the cylinder 13, and a motor 15 that rotates and drives the rotary shaft 14. The cylinder 13 includes a hopper 16 that is provided in the vicinity of one end of the cylinder 13 on the opposite side of the mold 12 and supplies the resin composition into the cylinder 13. The cylinder 13 includes a supercritical nitrogen supply unit 17 provided downstream of the hopper 16 and in the vicinity of the central part of the cylinder 13.

The supercritical nitrogen supply unit 17 supplies supercritical nitrogen into the cylinder 13. The supercritical nitrogen supply unit 17 includes a supercritical nitrogen generator 18 that generates supercritical nitrogen, a nitrogen conduit 19 that conveys the supercritical nitrogen generated in the supercritical nitrogen generator 18 to the cylinder 13, and a metering device 20 interposed in the course of the nitrogen conduit 19. The nitrogen conduit 19 is connected to the cylinder 13 through a cutoff valve 21.

The cylinder 13 includes a nozzle 22 at the other end thereof on the side of the mold 12. The cylinder 13 includes a plurality of heaters 23a on the outer circumferential surface thereof, while the nozzle 22 includes a heater 23b on the outer circumferential surface thereof. The nozzle 22 is connected to the mold 12 through the cutoff valve 24.

The rotary shaft 14 is connected to the motor 15 at the end thereof on the opposite side of the mold 12. The rotary shaft 14 also has a spiral screw 25 provided on the outer circumferential surface thereof, and a screw head 26 provided in the foremost end on the side of the mold 12. The screw 25 includes a base end side continuous screw 25a, a discontinuous screw 25b, and a leading end side continuous screw 25c provided between the screw head 26 and the discontinuous screw 25b.

The continuous screws 25a and 25c have a shape of a blade continuous in the circumferential direction. On the other hand, the discontinuous screw 25b has a shape of a blade formed intermittently in the circumferential direction. The base end side continuous screw 25a is provided in a portion from the end on the side of the motor 15 through the lower part of the hopper 16 to a forward and lower part of the supercritical nitrogen supply unit 17. The discontinuous screw 25b is provided beneath the supercritical nitrogen supply unit 17, and has a plurality of discontinuous parts in the circumferential direction of the rotary shaft 14.

The mold 12 is composed of a fixed mold 12a having a depression 27 of a shape along the outer shape of the mug 1, and a movable mold 12b having a projection 28 of a shape along the inner shape of the mug 1. A cavity 29 is formed between the depression 27 and the projection 28. The cavity 29 is connected to the nozzle 22 of the injection molding apparatus 11 through a sprue 30 provided in the fixed mold 12a.

Next, a method for production of the mug 1 using the injection molding apparatus 11 will be described. In the injection molding apparatus 11, first, the resin composition is supplied into the cylinder 13 from the hopper 16. As the resin composition, a mixture can be suitably used in which 0.1 to 50 parts by mass of lamellar silicate having an average layer thickness in the range of 1 to 100 nm and a longer diameter of not more than 150 nm and having an average particle size in the range of 1 to 150 nm as fine particle is mixed with a resin mixture of a thermoplastic resin containing not less than 50% by mass of a polylactic acid. Examples of such a resin composition can include Terramac (registered trademark) made by Unitika, Ltd.

The resin composition is stirred by the continuous screw 25a within the cylinder 13 under heating by the heater 23a to be molten, and the formed molten resin is conveyed in the direction of the mold 12.

Next, supercritical nitrogen is supplied to the molten resin from the supercritical nitrogen supply unit 17. At this time, because the discontinuous screw 25b is provided beneath the supercritical nitrogen supply unit 17, the supercritical nitrogen is stirred by the discontinuous screw 25b, and is sufficiently mixed with the molten resin. As a result, a resin composition as a solution consisting of only a liquid phase in which the molten resin is impregnated with the supercritical nitrogen is formed within the cylinder 13 between the screw head 26 and the nozzle 22. At this time, a nucleus for foaming has not been formed yet in the resin composition.

Next, the resin composition impregnated with the supercritical nitrogen is injected from the nozzle 22 into the cavity 29 of the mold 12 through the sprue 30. At this time, the inside of the nozzle 22 is a region in which the pressure within the nozzle is lower than that within the cylinder 13, and a nucleus for foaming is formed in the resin composition while the resin composition passes through this region. It is considered that the lamellar silicate is used for the nucleus for foaming.

The conditions of injecting the resin composition may be a cylinder temperature of 190 to 210°C, an injection pressure of 175 MPa, an injection rate of 50 mm/second, and a time to fill the cavity 29 of 1.44 seconds, for example. The surface temperature in the cavity 29 of the mold 12 is not less than 75°C and less than 90°C.

Next, the cavity 29 is filled with the resin composition injected into the cavity 29 to the top end thereof. Subsequently, foaming starts in a portion serving an inner side of the injection-molded article of the resin composition, and the foam layer 4 is formed. When the resin composition cools and solidifies, the injection-molded article comprising the foam layer 4 of discontinuous cells inside thereof and the non-foam layer 5 on the surfaces thereof can be obtained.

The injection-molded article can be extracted as a product by opening the mold 12 for unmolding. At the time of the unmolding, unmolding from the projection 28 may be difficult because the polylactic acid is contracted by being cooled. Then, in the mold 12, means for introducing a compressed air is provided between the injection-molded article and the projection 28. Thereby, a gap can be formed between the injection-molded article and the projection 28, and the unmolding can be easily performed. The means for introducing the compressed air between the injection-molded article and the projection 28 in the mold 12 is proposed by the present applicants (for example, see Patent Literature 3).

As above, the mug 1 shown in Figure 1 can be obtained. The mug 1 includes the non-foam layer 5 formed integrally with the foam layer 4. The foam layer 4 and the non-foam layer 5 are both formed with the resin composition containing the polylactic acid. Accordingly, the mug 1 can be easily biodegraded in the soil by action of microorganisms such as bacteria after disposal. The biodegradation can be accelerated by crushing the mug 1 at the time of disposal to expose the internal foam layer 4.

As a result, according to the mug 1, an effect that the mug is not easily decomposed at the time of use but is easily biodegraded after disposal can be obtained.

Moreover, the mug 1 has a specific gravity of not less than 1 by addition of the lamellar silicate to the resin mixture of the thermoplastic resin containing the polylactic acid, and sinks in water. Accordingly, the mug 1 can be easily washed by water.

The entire mug 1 has opaque white color by addition of the lamellar silicate. A coating layer may be formed on the surface in order to further give beauty to the mug. Without biodegradability, the coating layer leads to impaired biodegradability when the mug 1 is discarded. Then, the coating layer is preferably a coating film containing a biodegradable pigment such as a pigment made of soybean as a raw material (soy ink), or a coating film of a material derived from a plant as Japanese lacquer and having biodegradability by itself. In the case where the coating layer is formed, the mug 1 can obtain a sharp coating layer without providing a base layer because the entire mug 1 has opaque white color as mentioned above, and it is convenient.

In the mug 1 obtained by the method for production according to the present embodiment, the surface thereof has surface roughness in the range of 1 to 30 µm Thereby, when the coating layer of Japanese lacquer is formed, an anchor effect can be obtained, so that the coating layer of Japanese lacquer can obtain good adhesiveness to the mug 1.

Next, Examples and Comparative Examples will be shown.

### Example 1

In the present Example, using the injection molding apparatus 11 shown in Figure 3, the mug 1 having the shape shown in Figure 1 was produced. The mug 1 produced in the present Example has an outer diameter of the topmost part (mouth portion) of 80 mm, an outer diameter of the bottom of 50 mm, a height of 80 mm, and a weight of 50.25 g.

In the present Example, a resin composition containing a polylactic acid and lamellar silicate as fine particles having an average particle size of 40 nm (made by Unitika, Ltd., Terramac (registered trademark) TE-8210) was impregnated with 0.15% by weight of supercritical nitrogen based on the resin composition, and injected into the cavity 29. The injection was performed on conditions of a cylinder temperature of 195°C, an injection pressure of 175 MPa, an injection rate of 50 mm/second, and a time to fill the cavity 29 of 1.44 seconds. The surface temperature in the cavity 29 of the mold 12 at the time of injection was 89°C, and back pressure was 20 MPa.

Next, the mug 1 obtained in the present Example was cut, and the shape of the cross section of the cut piece was observed by the scanning electron microscope. Then, as shown in Figure 2, it was found that the foam layer 4 of discontinuous cells was included inside ofthe cut piece, and the non-foam layer 5 was included on the surfaces of the cut piece. The average pore size of the discontinuous cell of the foam layer 4 was 9 to 15 µm.

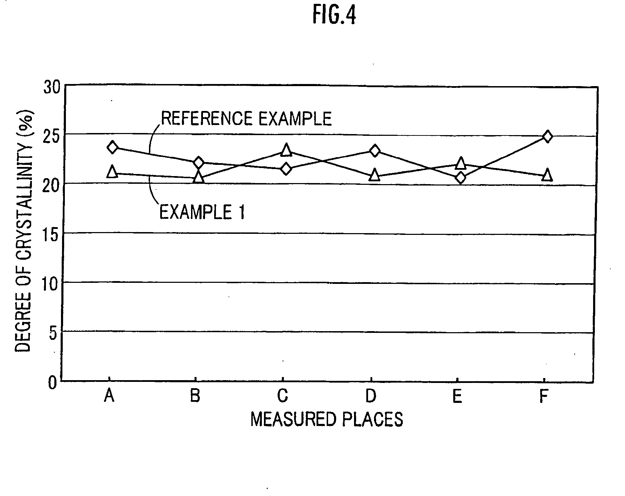

Next, a degree of crystallinity of the non-foam layer 5 in each part of the mug 1 obtained in the present Example was measured by differential scanning calorimetry. The places to be measured were six places, i.e., an outer bottom surface A (in the vicinity of a gate), an inner bottom surface B, an outer surface of a peripheral wall portion C, a front portion D of the handle portion 3, a rear portion E of the handle portion 3, and an outer surface of the mouth portion F, as shown in Figure 1. With respect to the thickness (wall thickness) of each part, the outer bottom surface A and the inner bottom surface B had a thickness of 2.5 mm, the outer surface of the peripheral wall portion C had a thickness of 1.9 mm, the handle portion 3 had a thickness of 2.5 mm, and the outer surface of the mouth portion F had a thickness of 2.9 mm. Figure 4 shows the measurement result of the degree of crystallinity. As shown in Figure 4, in each part of the mug 1 obtained in the present Example, the non-foam layer 5 has a degree of crystallinity of 20.5 to 23.5%.

Next, in order to evaluate heat retaining properties of the mug 1 obtained in the present Example, the mug 1 was filled with 50°C hot water to an upper portion thereof. The upper portion was covered with a plate made of the same material as that of the mug and having a thickness of 5 mm, and the mug was left for 60 minutes in a room at 20°C. Subsequently, when the temperature of the hot water in the mug 1 was measured in the center of the mug 1 using a thermometer, it was 33.2°C.

Next, in order to evaluate heat resistance of the mug 1 obtained in the present Example, the temperature of the mug 1 was kept at 120°C for 2 minutes, and presence or absence of deformation was visually observed.

Table 1 shows the amount of the supercritical nitrogen impregnated in the resin composition, the average pore size of the discontinuous cell of the foam layer 4 in the mug 1, and the temperature of the hot water after filling the mug with the hot water and leaving the mug for 60 minutes. Table 2 shows the surface temperature of the cavity 29 of the mold 12 at the time of injection molding, the degree of crystallinity of the non-foam layer 5 of the mug 1, presence or absence of deformation at the time of keeping the temperature of the mug at 120°C for 2 minutes, and a molding cycle time.

### Example 2

In the present Example, the mug 1 having the shape shown in Figure 1 was produced by the completely same method as that of Example 1 except that a polylactic acid composition containing lamellar silicate having an average particle size of 145 nm (made by Unitika, Ltd., Terramac (registered trademark) TE-8210) was used as the fine particles. The Terramac TE-8210 containing lamellar silicate having an average particle size of 145 nm used in the present Example has a grade different from that of the Terramac TE-8210 containing lamellar silicate having an average particle size of 40 nm used in Example 1.

Next, in the mug 1 obtained in the present Example, the shape of the cross section of the cut piece was observed by the completely same method as that of Example 1. Then, as shown in Figure 2, it was found that the foam layer 4 of discontinuous cells was included inside of the cut piece, and the non-foam layer 5 was included on the surfaces of the cut piece. The average pore size of the discontinuous cell of the foam layer 4 was 9 to 15 µm.

Next, in the mug 1 obtained in the present Example, the degree of crystallinity of the non-foam layer 5 in each part of the mug 1 was measured by the completely same method as that of Example 1. Then, the non-foam layer 5 had a degree of crystallinity of 21 to 23%.

Next, in the mug 1 obtained in the present Example, the temperature of the hot water after leaving the mug for 60 minutes was measured by the completely same method as that of Example 1.

Next, in the mug 1 obtained in the present Example, presence or absence of deformation was observed by the completely same method as that of Example 1.

Table 1 shows the amount of the supercritical nitrogen impregnated in the resin composition, the average pore size of the discontinuous cell of the foam layer 4 in the mug 1, and the temperature of the hot water after filling the mug with the hot water and leaving the mug for 60 minutes. Table 2 shows the surface temperature of the cavity 29 of the mold 12 at the time of injection molding, the degree of crystallinity of the non-foam layer 5 ofthe mug 1, presence or absence of deformation at the time of keeping the temperature of the mug at 120°C for 2 minutes, and a molding cycle time.

### Example 3

In the present Example, the mug 1 having the shape shown in Figure 1 was produced by the completely same method as that of Example 1 except that the surface temperature in the cavity 29 of the mold 12 was 76°C.

Next, in the mug 1 obtained in the present Example, the shape of the cross section of the cut piece was observed by the completely same method as that of Example 1. Then, as shown in Figure 2, it was found that the foam layer 4 of discontinuous cells was included inside of the cut piece, and the non-foam layer 5 was included on the surfaces of the cut piece. The average pore size of the discontinuous cell of the foam layer 4 was 9 to 13 µm.

Next, in the mug 1 obtained in the present Example, the degree of crystallinity of the non-foam layer 5 in each part of the mug 1 was measured by the completely same method as that of Example 1. Then, the non-foam layer 5 had a degree of crystallinity of 15 to 23%.

Next, in the mug 1 obtained in the present Example, the temperature of the hot water after leaving the mug for 60 minutes was measured by the completely same method as that of Example 1.

Next, in the mug 1 obtained in the present Example, presence or absence of deformation was observed by the completely same method as that of Example 1.

Table 1 shows the amount of the supercritical nitrogen impregnated in the resin composition, the average pore size of the discontinuous cell of the foam layer 4 in the mug 1, and the temperature of the hot water after filling the mug with the hot water and leaving the mug for 60 minutes. Table 2 shows the surface temperature of the cavity 29 of the mold 12 at the time of injection molding, the degree of crystallinity of the non-foam layer 5 of the mug 1, presence or absence of deformation at the time of keeping the temperature of the mug at 120°C for 2 minutes, and a molding cycle time.

### Example 4

In the present Example, the mug 1 having the shape shown in Figure 1 was produced by the completely same method as that of Example 1 except that the resin composition was impregnated with 0.05% by weight of supercritical nitrogen based on the resin composition.

Next, in the mug 1 obtained in the present Example, the shape of the cross section of the cut piece was observed by the completely same method as that of Example 1. Then, as shown in Figure 2, it was found that the foam layer 4 of discontinuous cells was included inside of the cut piece, and the non-foam layer 5 was included on the surfaces of the cut piece. The average pore size of the discontinuous cell of the foam layer 4 was 0.55 to 10 µm.

Next, in the mug 1 obtained in the present Example, the degree of crystallinity of the non-foam layer 5 in each part of the mug 1 was measured by the completely same method as that of Example 1. Then, the non-foam layer 5 had a degree of crystallinity of 20.5 to 23.5%.

Next, in the mug 1 obtained in the present Example, the temperature of the hot water after leaving the mug for 60 minutes was measured by the completely same method as that of Example 1.

Next, in the mug 1 obtained in the present Example, presence or absence of deformation was observed by the completely same method as that of Example 1.

Table 1 shows the amount of the supercritical nitrogen impregnated in the resin composition, the average pore size of the discontinuous cell of the foam layer 4 in the mug 1, and the temperature of the hot water after filling the mug with the hot water and leaving the mug for 60 minutes. Table 2 shows the surface temperature of the cavity 29 of the mold 12 at the time of injection molding, the degree of crystallinity of the non-foam layer 5 of the mug 1, presence or absence of deformation at the time of keeping the temperature of the mug at 120°C for 2 minutes, and a molding cycle time.

### Example 5

In the present Example, the mug 1 having the shape shown in Figure 1 was produced by the completely same method as that of Example 1 except that the resin composition was impregnated with 0.3% by weight of supercritical nitrogen based on the resin composition.

Next, in the mug 1 obtained in the present Example, the shape ofthe cross section of the cut piece was observed by the completely same method as that of Example 1. Then, as shown in Figure 2, it was found that the foam layer 4 of discontinuous cells was included inside of the cut piece, and the non-foam layer 5 was included on the surfaces of the cut piece. The average pore size of the discontinuous cell of the foam layer 4 was 12 to 48 µm.

Next, in the mug 1 obtained in the present Example, the degree of crystallinity of the non-foam layer 5 in each part of the mug 1 was measured by the completely same method as that of Example 1. Then, the non-foam layer 5 had a degree of crystallinity of 21 to 23.5%.

Next, in the mug 1 obtained in the present Example, the temperature of the hot water after leaving the mug for 60 minutes was measured by the completely same method as that of Example 1.

Next, in the mug 1 obtained in the present Example, presence or absence of deformation was observed by the completely same method as that of Example 1.

Table 1 shows the amount ofthe supercritical nitrogen impregnated in the resin composition, the average pore size of the discontinuous cell of the foam layer 4 in the mug 1, and the temperature of the hot water after filling the mug with the hot water and leaving the mug for 60 minutes. Table 2 shows the surface temperature of the cavity 29 of the mold 12 at the time of injection molding, the degree of crystallinity of the non-foam layer 5 of the mug 1, presence or absence of deformation at the time of keeping the temperature of the mug at 120°C for 2 minutes, and a molding cycle time.

### Example 6

In the present Example, the mug 1 having the shape shown in Figure 1 was produced by the completely same method as that of Example 1 except that the cylinder temperature at the time of injection was 200°C and the surface temperature in the cavity 29 of the mold 12 was 110°C.

Next, in the mug 1 obtained in the present Example, the shape of the cross section of the cut piece was observed by the completely same method as that of Example 1. Then, as shown in Figure 2, it was found that the foam layer 4 of discontinuous cells was included inside of the cut piece, and the non-foam layer 5 was included on the surfaces of the cut piece. The average pore size of the discontinuous cell of the foam layer 4 was 9 to 15 µm.

Next, in the mug 1 obtained in the present Example, the degree of crystallinity of the non-foam layer 5 in each part of the mug 1 was measured by the completely same method as that of Example 1. Then, the non-foam layer 5 had a degree of crystallinity of 29 to 35%.

Next, in the mug 1 obtained in the present Example, the temperature of the hot water after leaving the mug for 60 minutes was measured by the completely same method as that of Example 1.

Next, in the mug 1 obtained in the present Example, presence or absence of deformation was observed by the completely same method as that of Example 1.

Table 1 shows the amount of the supercritical nitrogen impregnated in the resin composition, the average pore size of the discontinuous cell of the foam layer 4 in the mug 1, and the temperature of the hot water after filling the mug with the hot water and leaving the mug for 60 minutes. Table 2 shows the surface temperature of the cavity 29 of the mold 12 at the time of injection molding, the degree of crystallinity of the non-foam layer 5 of the mug 1, presence or absence of deformation at the time of keeping the temperature of the mug at 120°C for 2 minutes, and a molding cycle time.

### Example 7

In the present Example, the mug 1 having the shape shown in Figure 1 was produced by the completely same method as that of Example 1 except that the surface temperature in the cavity 29 of the mold 12 was 70°C.

Next, in the mug 1 obtained in the present Example, the shape of the cross section of the cut piece was observed by the completely same method as that of Example 1. Then, as shown in Figure 2, it was found that the foam layer 4 of discontinuous cells was included inside of the cut piece, and the non-foam layer 5 was included on the surfaces of the cut piece. The average pore size of the discontinuous cell of the foam layer 4 was 9 to 15 µm.

Next, in the mug 1 obtained in the present Example, the degree of crystallinity of the non-foam layer 5 in each part of the mug 1 was measured by the completely same method as that of Example 1. Then, the non-foam layer 5 had a degree of crystallinity of 0.5 to 2.0%.

Next, in the mug 1 obtained in the present Example, the temperature of the hot water after leaving the mug for 60 minutes was measured by the completely same method as that of Example 1.

Next, in the mug 1 obtained in the present Example, presence or absence of deformation was observed by the completely same method as that of Example 1.

Table 1 shows the amount of the supercritical nitrogen impregnated in the resin composition, the average pore size of the discontinuous cell of the foam layer 4 in the mug 1, and the temperature of the hot water after filling the mug with the hot water and leaving the mug for 60 minutes. Table 2 shows the surface temperature of the cavity 29 of the mold 12 at the time of injection molding, the degree of crystallinity of the non-foam layer 5 ofthe mug 1, presence or absence of deformation at the time of keeping the temperature ofthe mug at 120°C for 2 minutes, and a molding cycle time.

### [Comparative Example 1]

In the present Comparative Example, the mug 1 having the shape shown in Figure 1 was produced by the completely same method as that of Example 1 except that the resin composition was impregnated with 0.01% by weight of supercritical nitrogen based on the resin composition.

Next, in the mug 1 obtained in the present Comparative Example, the shape of the cross section of the cut piece was observed by the completely same method as that of Example 1. Then, as shown in Figure 2, it was found that the foam layer 4 of discontinuous cells was included inside of the cut piece, and the non-foam layer 5 was included on the surfaces of the cut piece. The average pore size of the discontinuous cell of the foam layer 4 was 0.1 to 0.4 µm.

Next, in the mug 1 obtained in the present Comparative Example, the degree of crystallinity of the non-foam layer 5 in each part of the mug 1 was measured by the completely same method as that of Example 1. Then, the non-foam layer 5 had a degree of crystallinity of 0.5 to 2%.

Next, in the mug 1 obtained in the present Comparative Example, the temperature ofthe hot water after leaving the mug for 60 minutes was measured by the completely same method as that of Example 1.

Next, in the mug 1 obtained in the present Comparative Example, presence or absence of deformation was observed by the completely same method as that of Example 1.

Table 1 shows the amount of the supercritical nitrogen impregnated in the resin composition, the average pore size of the discontinuous cell of the foam layer 4 in the mug 1, and the temperature of the hot water after filling the mug with the hot water and leaving the mug for 60 minutes. Table 2 shows the surface temperature of the cavity 29 of the mold 12 at the time of injection molding, the degree of crystallinity of the non-foam layer 5 ofthe mug 1, presence or absence of deformation at the time of keeping the temperature of the mug at 120°C for 2 minutes, and a molding cycle time.

### [Comparative Example 2]

In the present Comparative Example, the mug 1 having the shape shown in Figure 1 was produced by the completely same method as that of Example 1 except that the resin composition was impregnated with 0.4% by weight of supercritical nitrogen based on the resin composition.

Next, in the mug 1 obtained in the present Comparative Example, the shape of the cross section of the cut piece was observed by the completely same method as that of Example 1. Then, as shown in Figure 2, it was found that the foam layer 4 of discontinuous cells was included inside of the cut piece, and the non-foam layer 5 was included on the surfaces of the cut piece. The average pore size of the discontinuous cell of the foam layer 4 was 70 to 300 µm. Apparently, the mug 1 in the Comparative Example does not have sufficient strength because the average pore size is large.

Next, in the mug 1 obtained in the present Comparative Example, the temperature ofthe hot water after leaving the mug for 60 minutes was measured by the completely same method as that of Example 1.

Next, in the mug 1 obtained in the present Comparative Example, presence or absence of deformation was observed by the completely same method as that of Example 1.

Table 1 shows the amount of the supercritical nitrogen impregnated in the resin composition, the average pore size of the discontinuous cell of the foam layer 4 in the mug 1, and the temperature of the hot water after filling the mug with the hot water and leaving the mug for 60 minutes.

### [Reference Example]

In the present Reference Example, the mug 1 having the shape shown in Figure 1 was produced by the completely same method as that of Example 1 except that the resin composition was never impregnated with supercritical nitrogen, and the surface temperature in the cavity 29 of the mold 12 was 110°C.

Next, in the mug 1 obtained in the present Reference Example, the shape of the cross section of the cut piece was observed by the completely same method as that of Example 1. Then, as shown in Figure 2, it was found that no foam layer 4 was included inside of the cut piece, and the cut piece was entirely formed of the non-foam layer 5.

Next, in the mug 1 obtained in the present Reference Example, the degree of crystallinity of the non-foam layer 5 in each part of the mug 1 was measured by the completely same method as that of Example 1. Then, the non-foam layer 5 had a degree of crystallinity of 20.9 to 24.9%.

Next, in the mug 1 obtained in the present Reference Example, the temperature of the hot water after leaving the mug for 60 minutes was measured by the completely same method as that of Example 1.

Next, in the mug 1 obtained in the present Reference Example, presence or absence of deformation was observed by the completely same method as that of Example 1.

Table 1 shows the amount of the supercritical nitrogen impregnated in the resin composition, the average pore size of the discontinuous cell of the foam layer 4 in the mug 1, and the temperature of the hot water after filling the mug with the hot water and leaving the mug for 60 minutes. Table 2 shows the surface temperature of the cavity 29 of the mold 12 at the time of injection molding, the degree of crystallinity of the non-foam layer 5 of the mug 1, presence or absence of deformation at the time of keeping the temperature of the mug at 120°C for 2 minutes, and a molding cycle time.

Next, a relationship between the amount of the supercritical nitrogen impregnated into the resin composition and the heat retaining properties of the mug 1 will be described with reference to Table 1.

**[Table 1]**

| | Amount of nitrogen impregnated (% by weight) | Pore size of discontinuous cell of foam layer 4 (µm) | Temperature of hot water (°C) |
|---|---|---|---|
| Example 1 | 0.15 | 9-15 | 33.2 |
| Example 2 | 0.15 | 9-15 | 33.2 |
| Example 3 | 0.15 | 9-13 | 32.9 |
| Example 4 | 0.05 | 0.55-10 | 32.6 |
| Example 5 | 0.3 | 12-48 | 33.8 |
| Example 6 | 0.15 | 9-15 | 33.2 |
| Example 7 | 0.15 | 9-15 | 33.2 |
| Comparative Example 1 | 0.01 | 0.1-0.4 | 30.5 |
| Comparative Example 2 | 0.4 | 70-300 | 36 |
| Reference Example | - | - | 30 |

As shown in Table 1, the mugs 1 in Examples 1 to 7 are formed by injection molding the resin composition prepared by impregnating the polylactic acid and the fine particles with the supercritical nitrogen in the range of 0.05 to 0.3% by weight based on the whole amount of the resin composition, and comprise the foam layer 4 of the discontinuous cell having the pore size in the range of 0.55 to 48 µm inside thereof and the non-foam layer 5 on the surfaces thereof. The mug 1 of Comparative Example 1 is formed by injection molding the resin composition prepared by impregnating the polylactic acid and the fine particles with the supercritical nitrogen of 0.01 % by weight based on the whole amount of the resin composition, and comprises the foam layer 4 of the discontinuous cell having the pore size in the range of 0.1 to 0.4 µm inside thereof and the non-foam layer 5 on the surfaces thereof. The mug 1 of Reference Example is formed by injection molding the resin composition without impregnation with the supercritical nitrogen, comprises no foam layer 4 inside thereof, and is entirely formed of the non-foam layer 5.

As a result, in the mugs 1 in Examples 1 to 7, the temperature of the hot water after filling the mug with the hot water and leaving the mug for 60 minutes is kept at not less than 32.6°C. In the mug 1 of Comparative Example 1, the temperature of the hot water after filling the mug with the hot water and leaving the mug for 60 minutes is reduced to 30.5°C. In the mug 1 of Reference Example, the temperature of the hot water after filling the mug with the hot water and leaving the mug for 60 minutes is reduced to 30°C. Accordingly, apparently, the mugs 1 in Examples 1 to 7 have heat retaining properties higher than those of the mugs 1 in Comparative Example 1 and Reference Example.

As shown in Table 1, the mugs 1 in Examples 1 to 7 have the pore size of the discontinuous cell of the foam layer 4 in the range of 0.55 to 48 µm, and apparently have necessary strength.

On the other hand, the mug 1 in Comparative Example 2 is formed by injection molding the resin composition prepared by impregnating the polylactic acid and the fine particles with the supercritical nitrogen in the range of 0.05 to 0.3% by weight based on the whole amount of the resin composition. As a result, the mug 1 in Comparative Example 2 has a large pore size of the discontinuous cell of the foam layer 4 in the range of 70 to 300 µm, and apparently has no necessary strength.

Next, a relationship between the degree of crystallinity ofthe non-foam layer 5 of the mug 1, heat resistance, and the molding cycle time will be described with reference to Table 2.

**[Table 2]**

| | Temperature of mold (°C) | Degree of crystallinity of non-foam layer 5 (%) | Presence or absence of deformation | Molding cycle time (second) |
|---|---|---|---|---|
| Example 1 | 89 | 20.5-23.5 | Absent | 50 |
| Example 2 | 89 | 21-23 | Absent | 52 |
| Example 3 | 76 | 15-23 | Absent | 48 |
| Example 4 | 89 | 20.5-23.5 | Absent | 65 |
| Example 5 | 89 | 21-23.5 | Absent | 50 |
| Example 6 | 110 | 29-35 | Absent | 120 |
| Example 7 | 70 | 0.5-2.0 | * | 45 |
| Comparative Example 1 | 89 | 0.5-2.0 | * | 50 |
| Reference Example | 110 | 20.9-24.9 | Absent | 120 |

| | | | | |
|---|---|---|---|---|
| * Present (deformed such that the original shape is not held) | | | | |

As shown in Table 2, the mugs 1 in Examples 1 to 6 comprise the foam layer 4 inside thereof, and the non-foam layer 5 having a degree of crystallinity in the range of 15 to 35% on the surfaces thereof. The mugs 1 in Example 7 and Comparative Example 1 comprise the foam layer 4 inside thereof, and the non-foam layer 5 having a degree of crystallinity in the range of 0.5 to 2.0% on the surfaces thereof. The mug in Reference Example comprises no foam layer 4 inside thereof, and is entirely formed of the non-foam layer 5 having a degree of crystallinity in the range of 20.9 to 24.9%.

As a result, the mugs 1 in Examples 1 to 6 and the mug 1 in Reference Example do not deform even if the mugs are kept at a temperature of 120°C. On the other hand, the mugs 1 in Example 7 and Comparative Example 1 deform such that the original shape is not held if the mugs are kept at a temperature of 120°C for 2 minutes. Accordingly, apparently, the mugs 1 in Examples 1 to 6 have heat resistance higher than that of the mugs 1 in Example 7 and Comparative Example 1, and have heat resistance equal to that of the mug 1 in Reference Example.

As shown in Table 2, of the mugs 1 in Examples 1 to 7, the mugs 1 in Examples 1 to 5 and 7, in which the surface temperature of the cavity 29 of the mold 12 at the time of injection molding is within the range of 70 to 89°C, have a molding cycle time of not more than 65 seconds. On the other hand, the mug 1 in Example 6, in which the surface temperature of the cavity 29 is 110°C, has a molding cycle time of 120 seconds. Accordingly, apparently, the mugs in Examples 1 to 5 and 7 have manufacturing efficiency higher than that of the mug 1 in Example 6.

Because the mugs 1 in Examples 1 to 7 comprise the foam layer 4 inside thereof, easy biodegradation from the foam layer 4 is allowed if the mug is crushed to expose the foam layer 4 and discarded. Accordingly, the mugs 1 in Examples 1 to 7 have higher biodegradability than that of the mug 1 in Reference Example not including the foam layer 4.

The case where the molded article formed of the injection-molded article of the polylactic acid is the food container (mug 1) has been described as an example. However, the molded article may be a molded article for auto parts or electrical components. The molded article for auto parts or electrical components can be produced by the completely same method as that in the case of the mug 1 except that a cavity having a shape corresponding to the auto parts or electrical components is used instead of the mold 12 shown in Figure 3, and has the same heat resistance and heat retaining properties (insulation properties) as those of the mug 1.

### Reference Signs List

1 ... Mug (molded article), 4... Foam layer, 5 ... Non-foam layer

## Claims

1. A method for producing a molded article formed of an injection-molded article of a polylactic acid, the method comprising:
a step of mixing fine particles having an average particle size in the range of 1 to 150 nm with a polylactic acid, and further impregnating the polylactic acid and the fine particles with supercritical nitrogen in the range of 0.05 to 0.3% by weight based on a whole amount of a resin composition to form the resin composition; and
a step of injection molding the resin composition by injecting the resin composition into the cavity of a mold wherein the mold is heated such that a surface temperature of the cavity thereof is at a temperature in the range of 75°C to less than 90°C followed by a step of cooling and solidifying the resin composition, so as to form the injection-molded article comprising a foam layer of discontinuous cells inside of the injection-molded article, and a non-foam layer formed integrally with the foam layer on the surfaces thereof.

2. The method according to claim 1, wherein the foam layer of the injection-molded article obtained includes discontinuous cells having an average pore size in the range of 0.5 to 50 µm.

## Patentansprüche

1. Verfahren zur Herstellung eines Formgegenstands, der aus einem spritzgeformten Gegenstand von Polymilchsäure hergestellt wurde, wobei das Verfahren die folgenden Stufen umfasst:
eine Stufe eines Mischens von feinen Teilchen mit einer mittleren Teilchengröße im Bereich von 1 bis 150 nm mit Polymilchsäure und ferner eines Durchtränkens der Polymilchsäure und der feinen Teilchen mit superkritischem Stickstoff in einem Bereich von 0,05 bis 0,3 Gew.-%, bezogen auf die Gesamtmenge einer Harzzusammensetzung, zur Bildung der Harzzusammensetzung;
und
eine Stufe eines Spritzformens der Harzzusammensetzung durch Injizieren der Harzzusammensetzung in den Hohlraum einer Form, wobei die Form derart erwärmt wird, dass die Oberflächentemperatur des Hohlraums hiervon bei einer Temperatur im Bereich von 75 bis weniger als 90 °C liegt, gefolgt von einer Stufe eines Abkühlens und Verfestigens der Harzzusammensetzung, um den spritzgeformten Gegenstand herzustellen, der eine Schaumstoffschicht von diskontinuierlichen Zellen im Inneren des spritzgeformten Gegenstands und eine Nichtschaumstoffschicht umfasst, die integral mit der Schaumstoffschicht auf den Oberflächen hiervon gebildet wurde.

2. Verfahren nach Anspruch 1, wobei die Schaumstoffschicht des erhaltenen spritzgeformten Gegenstands diskontinuierliche Zellen umfasst, die eine mittlere Porengröße im Bereich von 0,5 bis 50 µm aufweisen.

## Revendications

1. Procédé de production d'un article moulé se composant d'un article moulé par injection d'un acide polylactique, le procédé comprenant:
une étape de mélange de particules fines ayant une taille de particule moyenne comprise dans la plage allant de 1 à 150 nm avec un acide polylactique, et en outre d'imprégnation de l'acide polylactique et des particules fines avec de l'azote supercritique dans la plage de 0,05 à 0,3 % en poids, par rapport à une quantité totale d'une composition de résine pour former la composition de résine; et
une étape de moulage par injection de la composition de résine par injection de la composition de résine dans la cavité d'un moule, le moule étant chauffé de sorte que la température de surface de la cavité de celui-ci soit à une température comprise dans la plage de 75 °C à moins de 90 °C, suivie par une étape de refroidissement et de solidification de la composition de résine, de sorte à former l'article moulé par injection comprenant une couche de mousse de cellules discontinues à l'intérieur de l'article moulé par injection, et une couche qui n'est pas de la mousse formée intégralement avec la couche de mousse sur ses surfaces.

2. Procédé selon la revendication 1, dans lequel la couche de mousse de l'article moulé par injection obtenu comprend des cellules discontinues ayant une taille de pore moyenne comprise dans la plage allant de 0,5 à 50 µm.
